# EUROPEAN PATENT APPLICATION

(11) **EP 2 537 690 A1**
(43) Date of publication of application: **26.12.2012**
(21) Application number: 12250124.0
(22) Date of filing: 22.06.2012
(51) Int. Cl.: B60D 1/06, B60D 1/24

(54) **Ball couplings**

(30) Priority: 24.06.2011 GB 201110817
(71) Applicant: Broderick, Nigel, Rowberrow Winscombe BS25 1QP (GB)
(72) Inventor: Broderick, Nigel, Rowberrow Winscombe BS25 1QP (GB)
(74) Representative: Brown, Michael Stanley

(57) **Abstract**

A ball coupling member includes:-
a) a mounting element (A) having means for attachment to a towing vehicle and including a pair of spaced apertured support plates (12),
b) a component (B) having a main body portion (14) and a generally spherical projecting formation (16), the main body (14) portion having through apertures that are disposed coaxially relative to the apertures (13) of the support plates (12),
c) pins or bolts (19) that pass through the apertures in the main body portion (14) and through the apertures (13) of the support plates (12), and
d) resilient means (17) surrounding the stems of the pins or bolts (19) and acting between the stems of the pins or bolts (19) and the walls of the apertures in the main body portion (14(.

## Description

### Field of the Invention

This invention relates to ball couplings for attaching a towing vehicle to a trailer, caravan or the like.

Current methods of attaching a towing vehicle to a trailer or caravan do not protect either the towing vehicle and its passengers or the trailer or caravan from the shocks, noises and stresses that pass between the towing vehicle and the towed vehicle as a result of metal-to-metal contact between the coupling member on the towing vehicle and the coupling member on the towed vehicle.

It is accordingly an object of the present invention to provide an improved form of ball coupling. It is a more specific object of the present invention to provide an improved form of coupling member for mounting on a towing vehicle.

### Summary of the Invention

According to the present invention there is provided a ball coupling member comprising:-
a) a mounting element having means for attachment to a towing vehicle and including a pair of spaced apertured support plates,
b) a component having a main body portion and a generally spherical projecting formation, the main body portion having through apertures that are disposed coaxially relative to the apertures of the support plates,
c) pins or bolts that pass through the apertures in the main body portion and through the apertures of the support plates, and
d) resilient means surrounding the stems of the pins or bolts and acting between the stems of the pins or bolts and the walls of the apertures in the main body portion.

The resilient means may be resilient bushes surrounding the stems of the pins or bolts.

There are preferably two apertures in each support plate and thus two apertures in the main body portion with two pins or bolts and two resilient bushes surrounding the stem of each pin or bolt.

The resilient means may alternatively be layers of polyurethane or the like formed in situ by production of the parts of the ball coupling member by an additive layer manufacturing procedure.

Resilient washers are preferably disposed between the main body portion and the adjacent surfaces of the support plates and will be so positioned as to prevent any direct metal-to-metal contact between the main body portion and the support plates.

### Brief Description of the Drawings

Figure 1 is a perspective view of a mounting element that includes two spaced support plates,
Figure 2 shows a component that fits between the two support plates,
Figure 3 shows the two bolts that hold the component of Figure 2 in engagement with the mounting member of Figure 1,

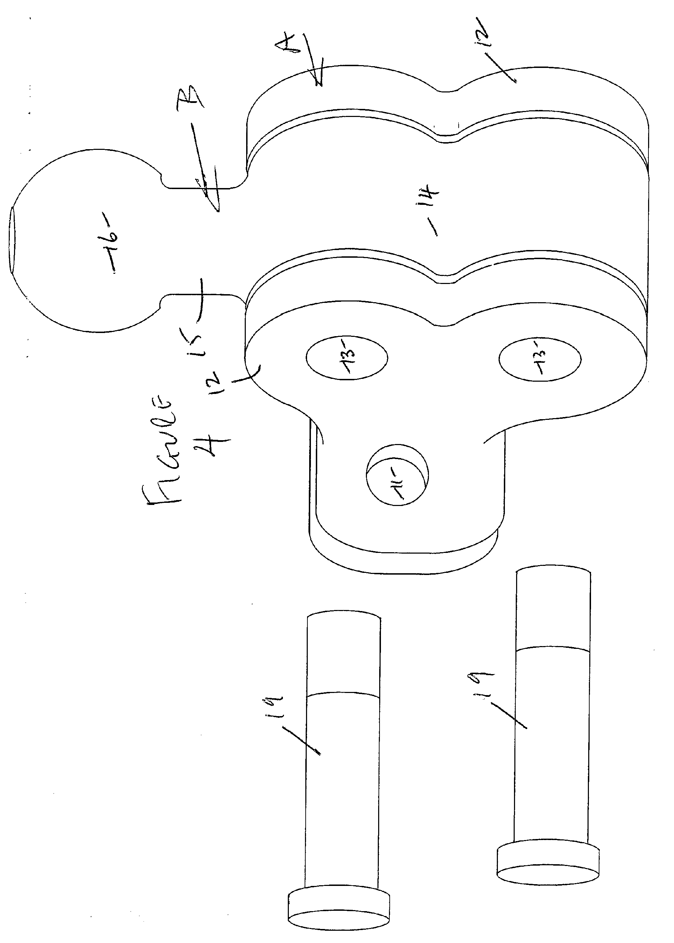

Figure 4 is a perspective view showing the assembled coupling member,

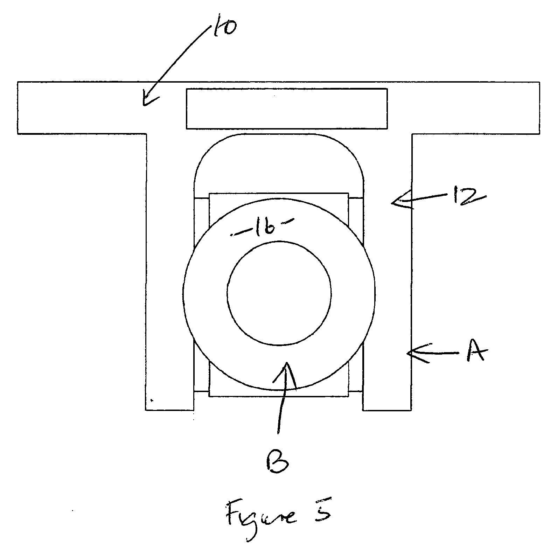

Figure 5 is a plan view of the assembled coupling member, and

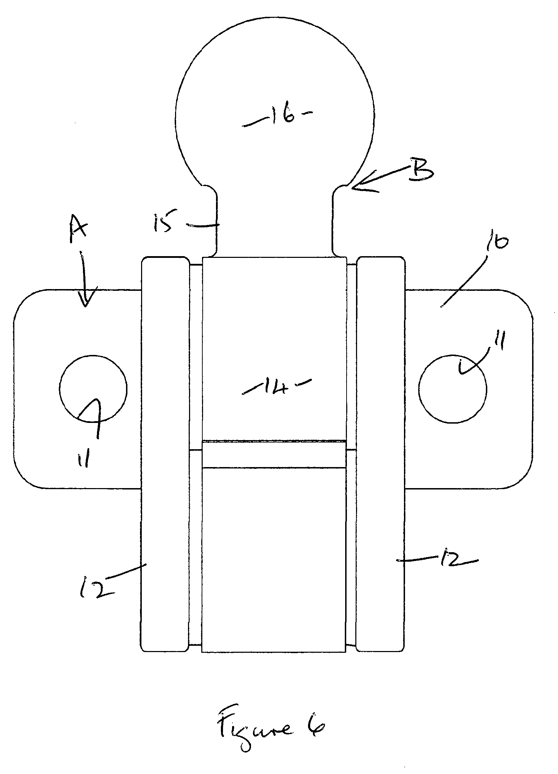

Figure 6 is a part-sectional view of the assembled coupling member.

### Description of the Preferred Embodiment

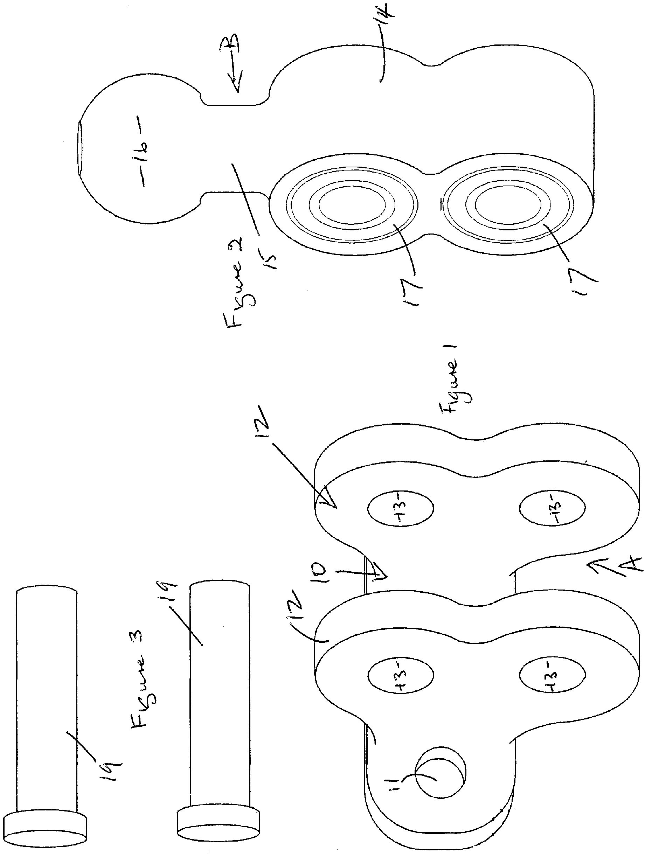

The coupling member shown in the drawings includes a mounting element A (shown in Figure 1) that includes a generally planar fixing plate 10 having a pair of spaced apertures 11 so that it can be bolted or otherwise connected to an appropriate part of a towing vehicle (not shown). Two spaced support plates 12 extend at right angles to the fixing plate 10 and each support plate 12 includes a pair of spaced apertures 13.

The other principal component B of the coupling is shown in Figure 2 and includes a main body portion 14, a stem 15 and a projecting generally spherical portion 16. The main body portion 14 is formed with a pair of through apertures in which generally cylindrical rubber bushes 17 are fitted. The bushes 17 can include integral flanges or separate washers 18 may be provided so that there is a resilient cushion on either side of the main body portion 14 to prevent direct metal-to-metal contact between the main body portion 14 and the support plates 12. There is thus no metal-to-metal contact between the towing vehicle and the trailer or other towed vehicle. If desired, a metal sleeve or tube (not shown) may be disposed within each of the cylindrical rubber bushes 17.

In assembly of the coupling member, component B is positioned between the two support plates 12 and headed bolts 19 are passed through the apertures 13 and the bores of the bushes 17. Nuts (not shown) are then tightened onto the threaded ends of the bolts 19 to hold the components of the coupling member securely together.

The stem 15 extends vertically with the generally spherical portion 16 presented upwardly so that it can readily be engaged by a complementary coupling formation on a caravan or other towed vehicle. The coupling member shown in the drawings can thus be used as a replacement for a standard tow ball attachment. The coupling member may alternatively be incorporated in a bespoke towbar design. Thus the support plates 12 may be joined to or integral with the round bar of a towbar.

The rubber bushes 17 surround the stems of the bolts 19 and act between the stems of the bolts 19 and the walls of the apertures in the main body portion 14, thus preventing any metal-to-metal contact between the bolts 19 and the main body portion 14.

As an alternative to the use of bolts 19, it is possible to use pins. Each pin will have a flat head at one end and a collar, clip or other fixing at the other end. The main forces to which the bolts or pins will be subjected will be radial and torsional so that some rotational movement of each bolt or pin could be advantageous. Pins (as opposed to bolts) may therefore be preferable.

The components of the coupling member may be produced by conventional manufacturing techniques. Alternatively, the resilient bushes 17 may be replaced by layers of polyurethane or the like formed in situ by production of the parts of the ball coupling member by an additive layer manufacturing procedure.

## Claims

1. A ball coupling member comprising:-
a) a mounting element having means for attachment to a towing vehicle and including a pair of spaced apertured support plates,
b) a component having a main body portion and a generally spherical projecting formation, the main body portion having through apertures that are disposed coaxially relative to the apertures of the support plates,
c) pins or bolts that pass through the apertures in the main body portion and through the apertures of the support plates, and
d) resilient means surrounding the stems of the pins or bolts and acting between the stems of the pins or bolts and the walls of the apertures in the main body portion.

2. A ball coupling member as claimed in Claim 1, in which the resilient means comprises resilient bushes surrounding the stems of the pins or bolts.

3. A ball coupling member as claimed in Claim 1, in which there are two apertures in each support plate and thus two apertures in the main body portion with two pins or bolts and two resilient bushes surrounding the stem of each pin or bolt.

4. A ball coupling member as claimed in Claim 1, in which the resilient means comprises layers of polyurethane or the like formed in situ by production of the parts of the ball coupling member by an additive layer manufacturing procedure.

5. A ball coupling member as claimed in any one of the preceding claims, in which resilient washers are disposed between the main body portion and the adjacent surfaces of the support plates and are so positioned as to prevent any direct metal-to-metal contact between the main body portion and the support plates.
